# Europäisches Patentamt
## European Patent Office
## Office européen des brevets

(19)

(11) Veröffentlichungsnummer: **0 143 942**
**B1**

(12)

# EUROPÄISCHE PATENTSCHRIFT

(45) Veröffentlichungstag der Patentschrift:
01.06.88

(51) Int. Cl.⁴: **H 04 Q 7/04**

(21) Anmeldenummer: **84111792.2**

(22) Anmeldetag: **03.10.84**

(54) System für den Austausch von Daten zwischen Funküberleiteinrichtungen.

(30) Priorität: **29.11.83 DE 3343054**

(43) Veröffentlichungstag der Anmeldung:
**12.06.85 Patentblatt 85/24**

(45) Bekanntmachung des Hinweises auf die Patenterteilung:
**01.06.88 Patentblatt 88/22**

(84) Benannte Vertragsstaaten:
**AT CH DE FR GB IT LI NL SE**

(56) Entgegenhaltungen:
EP - A - 0 040 954
EP - A - 0 073 043
DE - A - 2 709 855
DE - A - 3 130 143
DE - A - 3 138 248
DE - A - 3 212 023
DE - A - 3 213 645

**INSTITUTE OF ELECTRICAL AND ELECTRONICS ENGINEERS**, Konferenzbeircht der National Telecommunications Conference, Band 1, 1.-3. Dezember 1975, NEW ORLEANS, (US) Seiten 15-5 - 15-11, IEEE, NEW YORK. (US) F.T. CHEN et al.: "Digital multiplexing hierarchy for an integrated data transmission and switching system".
29. IEEE VEHICULAR TECHNOLOGY CONFERENCE,

(73) Patentinhaber: **ANT Nachrichtentechnik GmbH, Gerberstrasse 33, D-7150 Backnang (DE)**

(72) Erfinder: **Sperlich, Josef, Dipl.-Ing., Kelterweg 52, D-7150 Backnang (DE)**
Erfinder: **Gschwendtner, Hans, Dipl.-Ing., Silcherstrasse 1, D-7150 Backnang (DE)**

(74) Vertreter: **Wiechmann, Manfred, Dipl.-Ing., ANT Nachrichtentechnik GmbH Gerberstrasse 33 Postfach 11 20, D-7150 Backnang (DE)**

(56) Entgegenhaltungen: (Fortsetzung)
Konferenzbericht, ARLINGTON HEIGHTS, ILLINOIS, (US), 27.-30. März 1979, Seiten 245-252, IEEE, NEW YORK, (US) M.H. CALLENDAR et al.: "Network design for a fully automatic wide area radiotelephone service".

## Beschreibung

Die vorliegende Erfindung betrifft ein System für den Austausch von Daten zwischen Funküberleiteinrichtungen in einem Mobilfunk und/ oder Selektivrufnetz.

Die Funküberleiteinrichtungen in einem Selektivrufnetz dienen dazu, eine Suchmeldung, die z.B. von einem an ein Fernsprechnetz angeschlossenen ortsfesten Teilnehmer abgegeben wird, an einen mit einem Funkempfänger ausgestatteten mobilen Teilnehmer auszusenden. Nachdem der mobile Teilnehmer die Suchmeldung empfangen hat, ruft er den suchenden Teilnehmer über das übliche leitungsgebundene Fernsprechnetz zurück.

Im Unterschied zum Selektivruf sind die mobilen Teilnehmer im Mobilfunknetz mit Empfängern und Sendern ausgestattet, so dass ein Nachrichtenaustausch (z.B. Gespräch) zwischen dem suchenden Teilnehmer und dem gesuchten mobilen Teilnehmer direkt nach dem Aussenden der Suchmeldung über die Funkverbindung (mobiler Teilnehmer, Funküberleiteinrichtung, suchender ortsfester oder auch mobiler Teilnehmer) stattfinden kann.

Im allgemeinen ist dem suchenden Teilnehmer der aktuelle Aufenthaltsort des gesuchten mobilen Teilnehmers nicht bekannt. Um eine Verbindung vom suchenden Teilnehmer zum gesuchten mobilen Teilnehmer herstellen zu können, muss zunächst eine Verbindung zwischen dem suchenden Teilnehmer (z.B. ein ortsfester an das Fernsprechnetz angeschlossener Teilnehmer) mit derjenigen Funküberleiteinrichtung aufgebaut werden, in deren Funkverkehrsbereich sich der gesuchte mobile Teilnehmer gerade aufhält. Dazu ruft der suchende Teilnehmer die Heimat-Funküberleiteinrichtung, bei der der gesuchte mobile Teilnehmer registriert ist, an. Hier wird dem vom suchenden Teilnehmer abgegebenen Suchtelegramm die aktuelle Adresse der Funküberleiteinrichtung hinzugefügt, in deren Funkverkehrsbereich sich der gesuchte Teilnehmer befindet. Der Heimat-Funküberleiteinrichtung wird nämlich die Adresse von der Funküberleiteinrichtung, bei der sich der mobile Teilnehmer aufhält, automatisch mitgeteilt.

Aus der EP-A-0 040 954 ist ein Funkrufsystem bekannt, bei dem ein von einer Funküberleiteinrichtung kommendes Funkrufsignal mehreren Baisstationen zugeteilt wird, die alle gleichzeitig das Funkrufsignal aussenden.

Die DE-A-2 709 855 beschreibt ein Fernsprech- und Datennetz für mobile Teilnehmer, das die Herstellung einer Funkverbindung zu einem mobilen Teilnehmer ermöglicht, der sich an einer beliebigen Stelle innerhalb des Grossraumes eines Funknetzes aufhält. Dabei sind in einem hierarchisch aufgebauten System von Speichern die Daten über den jeweiligen Standort aller mobiler Teilnehmer abrufbar gespeichert.

Die Aufgabe der vorliegenden Erfindung ist es nun, ein System der eingangs genannten Art anzugeben, das einen sehr schnellen Aufbau einer Verbindung zwischen der Heimat-Funküberleiteinrichtung und der Funküberleiteinrichtung in deren Funkverkehrsbereich sich der gesuchte mobile Teilnehmer aufhält, ermöglicht.

Erfindungsgemäss wird diese Aufgabe dadurch gelöst, dass die Funküberleiteinrichtungen in verschiedene, bestimmten Regionen zugeordnete Gruppen aufgeteilt sind, dass der Datenaustausch zwischen den Funküberleiteinrichtungen einer jeden Gruppe jeweils über einen Multiplexer erfolgt und dass diese mit den Funküberleiteinrichtungen verbundenen, zu einer ersten Hierarchieebene gehörenden Multiplexer gegenseitig ihre Daten über Multiplexer austauschen, welche mindestens einer weieren Hierarchieebene zugeordnet sind, wobei die Multiplexer der verschiedenen Hierarchieebene durch Nachrichtennetze miteinander verbunden sind.

Zweckmässige Ausführungen der Erfindung gehen aus den Unteransprüchen hervor.

Anhand eines in der Zeichnung dargestellten Ausführungsbeispiels wird nachfolgend die Erfindung näher erläutert. Es zeigen:

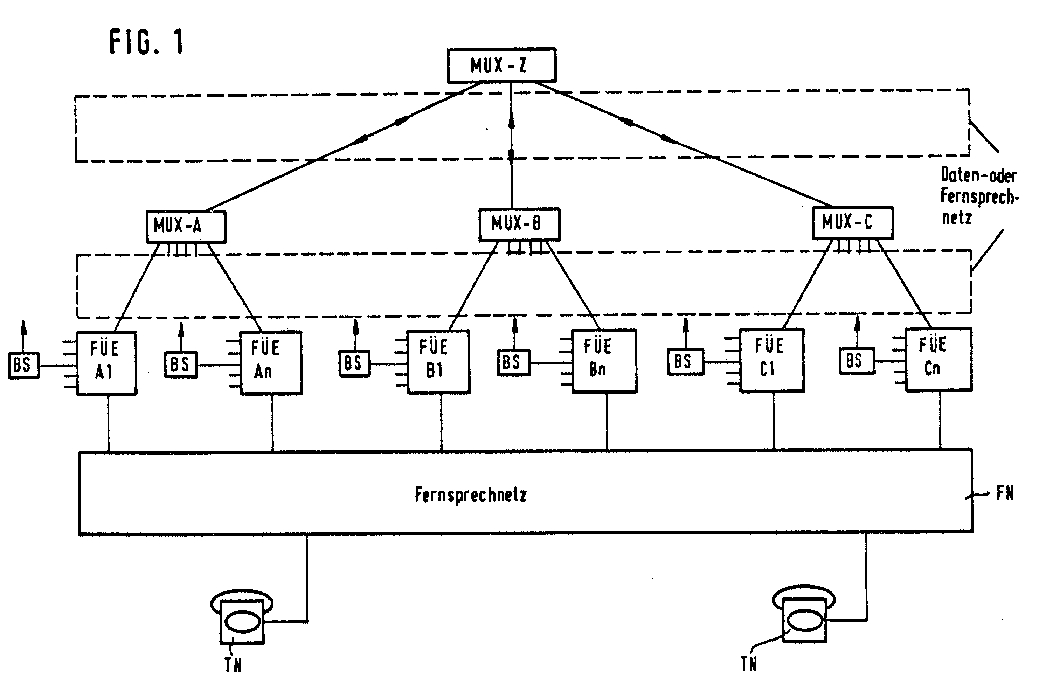

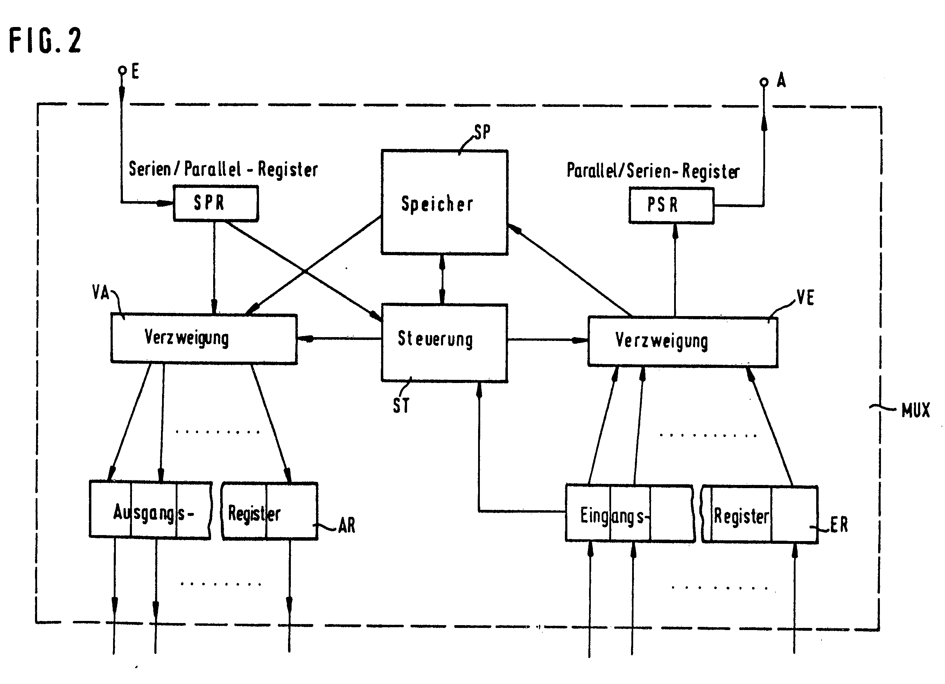

Fig. 1 ein System für den Austausch von Daten zwischen Funküberleiteinrichtungen nach der Erfindung und Fig. 2 einen Mulitplexer für das System.

Zu dem in der Fig. 1 dargestellten System gehört ein mit ortsfesten Teilnehmern TN verbundenes Fernsprechnetz FN, an das über ein grossflächiges Verkehrsgebiet verteilte Funküberleiteinrichtungen FÜE-A1 ... FÜE-Cn für ein Selektivruf- und/oder Mobilfunknetz angeschlossen sind. Das gesamte Verkehrsgebiet ist in verschiedene Regionen aufgeteilt, wobei jeder Region eine Gruppe von Funküberleiteinrichtungen FÜE-Al ÜE-An, FÜE-B1 ... FÜE-Bn, FÜE-C1 ... FÜE-Cn mit Basisstationen BS zum Aussenden und Empfangen von Funksignalen zugeordnet ist. Jede einzelne Funküberleiteinrichtung deckt dabei einen eigenen Funkverkehrsbereich ab.

Der Datenaustausch zwischen den Funküberleiteinrichtungen innerhalb einer Gruppe erfolgt jeweils über einen Multiplexer. So ist der Multiplexer MUX-A für den Datenaustausch zwischen den Funküberleiteinrichtungen FÜE-A1 ... FÜE-An, der Multiplexer MUX-B für den Datenaustausch zwischen den Funküberleiteinrichtungen FÜE-B1 ... FÜE-Bn und der Multiplexer MUX-C für den Datenaustausch zwischen den Funküberleiteinrichtungen FÜE-C1 ... FÜE-Cn zuständig. Diese soeben genannten, direkt z.B. über ein Nachrichtennetz (Daten- oder Fernsprechnetz) mit den Funküberleiteinrichtungen verbundenen Multiplexer MUX-A, MUX-B, MUX-C gehören zu einer ersten Multiplexer-Hierarchieebene. Es ist noch mindestens eine weitere, der ersten übergeordneten Multiplexer-Hierarchieebene vorhanden, deren Multiplexer, in Fig. 1 hat diese höhere Hierarchieebene nur den einen Multiplexer MUX-Z, den Datenaustausch zwischen den Multiplexern der darunter liegenden Hierarchieebene besorgen.

Mit den so hierarchisch gestaffelten Multiplexern ist ein sehr schneller Datenaustausch zwi-

schen Funküberleiteinrichtungen aus beliebigen Funkverkehrsbereichen möglich. Insbesondere in der oder den oberen Hierarchieebenen kann eine Vermaschung zwischen den Multiplexern einer Beschleunigung des Datenaustausches dienlich sein.

Es sei beispielsweise angenommen, ein ortsfester Teilnehmer TN will mit einem mobilen Teilnehmer, der sich gerade im Funkverkehrsbereich der Funküberleiteinrichtung FÜE-C1 befindet, Nachrichten austauschen. Dazu wählt der ortsfeste Teilnehmer, dem der Aufenthaltsort des von ihm gesuchten mobilen Teilnehmers nicht bekannt ist, die Teilnehmernummer des gesuchten Teilnehmers. Der ortsfeste Teilnehmer wird mit der nächstgelegenen Funküberleiteinrichtung, z.B. FÜE-A1, verbunden. Diese sendet ein Suchtelegramm (es enthält die Adresse des gesuchten Teilnehmers, Adresse der suchenden Funküberleiteinrichtung) an die Heimatfunküberleiteinrichtung, z.B. die FÜE-B1, bei der der gesuchte Teilnehmer registriert ist. Von hier erhält die Funküberleiteinrichtung FÜE-A1 die Adresse derjenigen Funküberleiteinrichtung FÜE-C1, bei der sich der mobile Teilnehmer gerade befindet. Die Heimatfunküberleiteinrichtung eines mobilen Teilnehmers bekommt nämlich in gewissen Zeitabständen die Adresse jeweils der Funküberleiteinrichtung mitgeteilt in deren Funkverkehrsbereich sich der mobile Teilnehmer aufhält.

Nachdem die Funküberleiteinrichtung FÜE-A1 die Adresse der Funküberleiteinrichtung FÜE-C1 erhalten hat, wird in dem angesprochenen Beispiel dann das Suchtelegramm, versehen mit der Zieladresse, von der Funküberleiteinrichtung FÜE-A1 über den Multiplexer MUX-A, den Multiplexer MUX-Z und den Multiplexer MUX-C zur Funküberleiteinrichtung FÜE-C1 durchgeschaltet, von der sie schliesslich an den gesuchten mobilen Teilnehmer ausgesendet wird.

Eine mögliche Ausführung für einen in dem oben beschriebenen System einsetzbaren Multiplexer zeigt die Fig. 2. Der Multiplexer MUX enthält mehrere Eingangsregister ER, in die von Multiplexern niederer Hierarchieebenen oder von Funküberleiteinrichtungen kommende Telegramme eingehen. Im Multiplexer gibt es nun zwei Wege, auf denen die in die Eingangsregister ER eingegangenen Telegramme wieder ausgegeben werden können. Der eine Weg führt über ein Parallel/Serien-Register PSR, das die parallelen Bitströme der Eingangsregister in einen seriellen Bitstrom mit erhöhter Bitrate umwandelt, zu einem Ausgang A, von dem aus die Telegramme zu einem Multiplexer einer höheren Hierarchieebene gelangen. Der andere Weg führt zu Ausgangsregistern AR, die ihre Daten an Multiplexer einer unteren Hierarchieebene oder an Funküberleiteinrichtungen abgeben.

Hinter den Eingangsregistern ER befindet sich eine Verzweigungsschaltung VE und vor den Ausgangsregistern AR eine Verzweigungsschaltung VA. Die Verzweigungsschaltung VE lenkt die Telegramme aus den Eingangsregistern ER zum Ausgang A oder auf den Weg zu den Ausgangsregistern AR. Eine Steuerung ST, der die Zieladressen der in den Multiplexer MUX eingehenden Telegramme mitgeteilt werden, signalisiert der Verzweigungsschaltung VE, ob z.B. ein Telegramm aus einem Eingangsregister zum Ausgang A oder zu einem Speicher SP durchgeschaltet werden soll. In diesen Speicher SP werden jeweils die Telegramme eingeschrieben, die von den Eingangsregistern zu den Ausgangsregistern geführt werden sollen.

An einem Eingang E laufen von Multiplexern höherer Hierarchieebenen kommende Telegramme als serieller Bitstrom in den Multiplexer ein und gelangen über ein Serien/Parallel-Register SPR an die Verzweigungsschaltung VA, welche gelenkt durch die Steuerung ST, die eingehenden Telegramme ihren Zieladressen entsprechend auf die Ausgangsregister AR aufteilt. Dabei sorgt ein Pufferspeicher im SPR für den Ausgleich beim Datenabfluss über die verschiedenen Ausgänge des Ausgangsregisters AR.

In die vom Eingang E her kommenden Telegrammfolgen werden im Zeitmultiplexbetrieb die im Speicher SP abgelegten Telegramme eingeblendet und auch durch die Verzweigungsschaltung VA auf die Ausgangsregister AR aufgeteilt. Die Verzögerungsschaltung VA setzt durch Zwischenspeicherung die Bitrate der austretenden Bitströme gegenüber der Bitrate der eintretenden Bitströme herab.. Den Telegrammen können auch Prioritätskennungen beigefügt werden, nach denen sich die Steuerung ST richtet, wenn sie die Reihenfolge und die Zeitpunkte bei der Durchschaltung der am Eingang E und im Speicher SP vorliegenden Telegramme an die Ausgangsregister AR bestimmt.

**Patentansprüche**

1. System für den Austausch von Daten zwischen Funküberleiteinrichtungen in einem Mobilfunk- und/oder Selektivrufnetz, dadurch gekennzeichnet, dass die Funküberleiteinrichtungen (FÜE-A1 ... FÜE-Cn) in verschiedene bestimmten Regionen zugeordnete Gruppen aufgeteilt sind, dass der Datenaustausch zwischen den Funküberleiteinrichtungen einer jeden Gruppe jeweils über einen Multiplexer (MUX-A, MUX-B, MUX-C) erfolgt und dass diese mit den Funküberleiteinrichtungen verbundenen, zu einer ersten Hierarchieebene gehörenden Multiplexer gegenseitig ihre Daten über Multiplexer (MUX-Z) austauschen, welche mindestens einer weiteren Hierarchieebene zugeordnet sind, wobei die Multiplexer der verschiedenen Hierarchieebenen durch Nachrichtennetze miteinander verbunden sind.

2. System nach Anspruch 1, dadurch gekennzeichnet, dass die Multiplexer höherer Hierarchieebenen durch ein Maschennetz miteinander verbunden sind.

3. System nach Anspruch 1, dadurch gekennzeichnet dass die Multiplexer (MUX) Eingangsregister (ER) aufweisen, in die von Funküberleiteinrichtungen oder Multiplexern niederer Hierarchieebenen kommende Telegramme einlaufen, dass eine in den Multiplexern vorhandene Steuerung (ST) die in die Eingangsregister (ER) eingegangenen Telegramme je nach deren Zieladresse entweder an einen mit Multiplexern höherer Hierarchieebenen verbundenen Ausgang (A) weiterleitet oder einem Speicher (SP) zuführt, dass die Multiplexer Ausgangsregister (AR) besitzen, worin im Zeitmultiplexbetrieb die im Speicher (SP) abgelegten und die von Multiplexern höherer Hierarchieebenen kommenden Telegramme eingehen und dass die Ausgangsregister (AR) ihre Telegramme an Multiplexer niederer Hierarchieebenen oder Funküberleiteinrichtungen weitergeben.

4. System nach Anspruch 3, dadurch gekennzeichnet, dass die Reihenfolge und die Zeitpunkte für die Weiterleitung der Telegramme von Multiplexern höherer Hierarchieebenen und der Telegramme aus dem Speicher (SP) an die Ausgangsregister (AR) sich nach einer den Telegrammen beigefügten Prioritätskennung richtet.

## Revendications

1. Système pour l'échange de données entre des dispositifs de radiotransmission dans un réseau radiotéléphonique mobile et/ou un réseau d'appel sélectif, caractérisé en ce que les dispositifs de radiotransmission (FÜE-A1 ...FÜE-Cn) sont répartis en différents groupes coordonnés à des régions déterminées, que l'échange de données entre les dispositifs de radiotransmission d'un même groupe s'effectue chaque fois par un multiplexeur (MUX-A, MUX-B, MUX-C) et que ces multiplexeurs, reliés aux dispositifs de radiotransmission et appartenant à un premier niveau hiérarchique, échangent leurs données par des multiplexeurs (MUX-Z) qui sont coordonnés à au moins un autre niveau hiérarchique, les multiplexeurs des différents niveaux hiérarchiques étant reliés entre eux par des réseaux de transmission de messages.

2. Système selon la revendication 1, caractérisé en ce que les multiplexeurs des niveaux hiérarchiques supérieurs sont reliés entre eux par un réseau maillé.

3. Système selon la revendication 1, caractérisé en ce que les multiplexeurs (MUX) présentent des registres d'entrée (ER), dans lesquels entrent les télégrammes provenant de dispositifs de radiotransmission ou de multiplexeurs de niveaux hiérarchiques inférieurs, qu'une commande (ST) présente dans les multiplexeurs retransmet les télégrammes entrés dans les registres d'entrée (ER), suivant leur adresse de destination, soit à une sortie (A) reliée à des multiplexeurs de niveaux hiérarchiques supérieurs, soit à une mémoire (SP), que les multiplexeurs possèdent des registres de sortie (AR), dans lesquels entrent, par multiplexage temporel, les télégrammes stockés dans la mémoire (SP) et les télégrammes provenant de multiplexeurs de niveaux hiérarchiques supérieurs et que le sregistres de sortie (AR) retransmettent leurs télégrammes à des multiplexeurs de niveaux hiérarchiques inférieurs ou à des dispositifs de radio-transmission.

4. Système selon la revendication 3, caractérisé en ce que l'ordre de succession et les instants de retransmission aux registres de sortie (AR) des télégrammes de multiplexeurs de niveaux hiérarchiques supérieurs et des télégrammes provenant de la mémoire (SP) sont déterminés en fonction d'un indicatif de priorité ajouté aux télégrammes.

## Claims

1. System for the exchange of data between radio relay equipments in a mobile radio network and/or selective call network, characterised thereby, that the radio relay equipments (FÜE-A1 ... FÜE-Cn) are divided up into different groups associated with certain regions, that the data exchange between the radio relay equipments of each group takes place by way of a multiplexer (MUX-A, MUX-B, MUX-C) and that these multiplexers, which are connected with the radio relay equipments and belong to a first hierarchic plane, exchange their data mutually by way of multiplexers (MUX-Z), which are associated with at least one further hierarchic plane, wherein the multiplexers of the different hierarchic planes are one connected with the other through communications networks.

2. System according to claim 1, characterised thereby, that the multiplexers of higher hierarchic planer are one connected with the other through a meshed network.

3. System according to claim 1, characterised thereby, that the multiplexers (MUX) display input registers (ER), into which run telegrams coming from radio relay equipments or multiplexers of lower hierarchic planes, that a control (ST) present in the multiplexers either passes the telegrams, that have come into the input registers (ER), to an output (A) connected with multiplexers of higher hierarchic planes or feeds them to a store (SP) respectively according to their target address, that the multiplexers possess output registers (AR), into which the telegrams deposited in the store (SP) and the telegrams coming form multiplexers of higher hierarchic planes enter in time multiplex operation and that the output registers (AR) pass their telegrams on to multiplexers of lower hierarchic planes or radio relay equipments.

4. System according to claim 3, characterised thereby, that the sequence and the points in time for the passing on of the telegrams from multiplexers of higher hierarchic planes and of the telegrams from the store to the output registers (AR) depends on a priority identification added to the telegrams.

FIG. 1

0 143 942

FIG. 2

E

A

Serien / Parallel - Register

SP

Speicher

Parallel/Serien- Register

SPR

PSR

VA

Verzweigung

Steuerung

VE

Verzweigung

ST

MUX

Ausgangs-

Register

AR

Eingangs-

Register

ER